# EUROPÄISCHE PATENTSCHRIFT

(11) **EP 3 281 509 B1**
(45) Veröffentlichungstag und Bekanntmachung des Hinweises auf die Patenterteilung: **13.11.2019**
(21) Anmeldenummer: 17401085.0
(22) Anmeldetag: 01.08.2017
(51) Int. Cl.: A01C 5/06, A01C 7/20

(54) **EINZELKORNSÄEINHEIT**
SINGLE SEED DRILL
UNITÉ SEMOIR MONOGRAINE

(30) Priorität: 09.08.2016 DE 102016114692
(43) Veröffentlichungstag der Anmeldung: 14.02.2018
(73) Patentinhaber: Amazonen-Werke H. Dreyer GmbH & Co. KG, 49205 Hasbergen (DE)
(72) Erfinder: Johannaber, Stefan Jan, 49536 Lienen (DE)

(56) Entgegenhaltungen:
- EP-A1- 0 214 369
- EP-A1- 0 521 845
- EP-A2- 0 136 165
- WO-A1-2011/037525
- WO-A1-2011/119095
- WO-A1-2017/036896

## Beschreibung

Die Erfindung betrifft eine Einzelkornsäeinheit gemäß Oberbegriff des Anspruchs 1 und eine Einzelkornsämaschine mit mehreren Einzelkornsäeinheiten.

Einzelkornsämaschinen mit quer zur Fahrtrichtung aneinander gereihten Einzelkornsäeinheiten werden für den mehrreihigen Austrag von Saatgut, wie beispielsweise Maiskörner, Sonnenblumenkerne oder Rapskerne, in definierten Ablageabständen verwendet. Bewährt haben sich insbesondere Maschinen mit einer separaten Vereinzelungsvorrichtung pro Einzelkornsäeinheit. Damit lassen sich auch in Fahrtrichtung vergleichsweise einheitliche Ablageabstände erzielen.

Eine derartige Sämaschine ist beispielsweise in der EP 2 480 063 B1 beschrieben. Demnach werden Saatkörner aus der Vereinzelungsvorrichtung jeweils durch einen Saatgutkanal in einen Bereich zwischen Schar und einer dieser nachlaufenden Fangrolle geleitet, auf dem Grund der von der Schar gebildeten Furche abgelegt und dort von der Fangrolle angedrückt. Aus der EP 0 038 241 B1 ist es ferner bekannt, einen unteren Endabschnitt des Saatgutkanals so auszubilden, dass Saatkörner unmittelbar vor der Lauffläche der Fangrolle abgelegt werden.

Für die Einhaltung eines korrekten Ablageabstands zwischen den einzelnen Saatkörnern in Fahrtrichtung sowie für ein korrektes Andrücken der Saatkörner sollte die Fangrolle im Arbeitsbetrieb ständig auf dem Furchengrund abrollen. Problematisch ist jedoch, dass ein abrollender Kontakt der Fangrolle mit dem Furchengrund bisher nicht immer gewährleistet werden konnte, vor allem wenn die vorauslaufende Schar über Erhebungen läuft, beispielsweise über einen größeren Stein. Schar und Scharträger heben dann die starr angekoppelte Fangrolle und den Saatgutkanal an. Die Folge ist eine unpräzise Ablage des Saatguts. Dem könnte bedingt durch langsameres Arbeiten entgegengewirkt werden. Dies ist jedoch unwirtschaftlich.

Die gattungsgemäße und nicht vorveröffentlichte WO 2017 036 896 A1 beschreibt eine Einzelkornsäeinheit, bei der Fangrolle (Fangelement) und Saatgutkanal (Saatrohr) relativ zu Schar bzw. Scharträger beweglich sind. Dazu sind die Dosiervorrichtung, das Saatrohr und das Fangelement als Einheit ein einem Träger, nämlich dem Fangrollenträger, montiert. Dies führt aber zu einem erheblichen konstruktiven Mehraufwand: gattungstypisch ist die Dosiervorrichtung, also die Vereinzelungseinheit, an einem entsprechend stabil ausgelegten Scharträger angebracht, an welchem zusätzlich der Fangrollenträger angebracht sein kann. Soll nun der Fangrollenträger die Vereinzelungseinheit tragen, muss dieser wesentlich stabiler ausgelegt sein.

Es besteht daher der Bedarf für Einzelkornsäeinheiten und Einzelkornsämaschinen, die sowohl eine präzise Ablage der Saatkörner als auch hohe Arbeitsgeschwindigkeiten ermöglichen.

Die gestellte Aufgabe wird mit einer Einzelkornsäeinheit für eine Einzelkornsämaschine gemäß Anspruch 1 gelöst. Die Einzelkornsäeinheit umfasst demnach einen Scharträger mit einer daran befestigten Schar, eine Vereinzelungsvorrichtung, eine Fangrolle und einen von der Vereinzelungsvorrichtung zur Fangrolle führenden Saatgutkanal. Erfindungsgemäß sind die Fangrolle und ein unterer Endabschnitt des Saatgutkanals an einem bezüglich des Scharträgers beweglichen Fangrollenträger befestigt.

Dadurch lässt sich die vertikale Position des Fangrollenträgers, und damit die vertikale Position der Fangrolle und des unteren Endabschnitt des Saatgutkanals, von der vertikalen Position des Scharträgers mit der daran befestigten Schar entkoppeln. Folglich kann die Schar über Erhebungen im Ackerboden laufen, ohne dabei die Fangrolle von einem von der Schar erzeugten Furchengrund abzuheben. Ferner bleibt der untere Endabschnitt des Saatgutkanals in der Furche. Somit wird das Saatgut zuverlässig in der Furche abgelegt und der Bodenkontakt der Fangrolle im Arbeitsbetrieb durchweg aufrechterhalten. Die Fangrolle rollt daher kontinuierlich mit der Arbeitsgeschwindigkeit der Einzelkornsäeinheit im Furchengrund ab.

Die Fangrolle führt dann für alle im Saatgutkanal antransportierten Saatkörner dieselbe Abrollbewegung aus, wodurch ein vorgegebener Ablageabstand in Fahrtrichtung für alle Saatkörner eingehalten werden kann. Außerdem werden die Saatkörner am Furchengrund zuverlässig von der Fangrolle angedrückt.

Die Schar kann beispielsweise zwei Schneidscheiben umfassen, die eine Furche mit im Wesentlichen rechteckigem Querschnitt ausbildet. Die nachfolgende Fangrolle schließt vorzugsweise am Furchengrund und den Seitenwänden der Furche formschlüssig mit dieser ab, so dass die Saatkörner aufgefangen, in der Furche abgelegt und angedrückt werden.

Erfindungsgemäß umfasst der Saatgutkanal wenigstens einen biegsamen Schlauch zwischen der Vereinzelungsvorrichtung und dem unteren Endabschnitt. Dies ermöglicht eine flexible Positionierung des unteren Endabschnitts bezüglich der Vereinzelungsvorrichtung.

Erfindungsgemäß kann der Saatgutkanal wenigstens einen teleskopartigen Abschnitt zwischen der Vereinzelungsvorrichtung und dem unteren Endabschnitt umfassen.

Dadurch lassen sich vertikale Relativbewegungen zwischen der Vereinzelungsvorrichtung und dem unteren Endabschnitt auch in einem starren Abschnitt des Saatgutkanals ausgleichen.

Die EP 0 521 845 A1 und EP 0 214 369 A1 zeigen herkömmliche Sämaschinen mit als Volumendosierungen ausgebildeten Dosiereinrichtungen, von denen aus über flexible Schläuche den Säscharen das volumenmäßig dosierte Saatgut zugeführt wird. Diese Dosiereinrichtungen sind an dem Rahmen der jeweiligen Sämaschine angeordnet und nicht an dem die Säschare tragenden Scharträgern befestigt.

Die EP 0 136 165 A2 zeigt ebenfalls herkömmliche Sämaschinen mit als Volumendosierungen ausgebildeten Dosiereinrichtungen, von denen aus über teleskopierbare Saatleitungen den Säscharen das volumenmäßig dosierte Saatgut zugeführt wird. Diese Dosiereinrichtungen sind an dem Rahmen der jeweiligen Sämaschine angeordnet und nicht an dem die Säschare tragenden Scharträgern befestigt.

Andere gattungsgemäße Sämaschinen sind aus WO 2011/037525 A1 und WO 2011/119095 A1 bekannt.

Erfindungsgemäß ist die Vereinzelungsvorrichtung an dem Scharträger befestigt. Im Bereich des Scharträgers treten vergleichsweise geringe arbeitsbedingte Erschütterungen und Vibrationen auf. Dies ermöglicht eine besonders präzise und zuverlässige Arbeitsweise der Vereinzelungsvorrichtung.

Vorzugsweise umfasst der Fangrollenträger eine Schwinge oder ein Parallelogramm-Gestänge mit vertikaler Beweglichkeit der Fangrolle und des unteren Endabschnitts. Schwingen sind vergleichsweise einfach aufgebaut und robust. Sie ermöglichen per Definition ein gemeinsames vertikales Schwenken der Fangrolle und des unteren Endabschnitts des Saatgutkanals. Ein Parallelogramm-Gestänge ermöglicht dagegen einen Hub der Fangrolle und des unteren Endabschnitts ohne zusätzliche Änderung deren Drehlage, wie bei einer starren Lastführung.

Vorzugsweise ist der Fangrollenträger nach unten hin federnd und insbesondere gegenüber dem Scharträger vorgespannt, um die Fangrolle an einen von der Schar erzeugten Furchengrund zu drücken. Dies ermöglicht einen besonders zuverlässigen Bodenkontakt der Fangrolle auf unebenem Ackerboden und somit ein gleichmäßiges Abrollen der Fangrolle mit der Arbeitsgeschwindigkeit der Einzelkornsäeinheit.

Vorzugsweise ist die Vereinzelungsvorrichtung zur Vereinzelung des Saatguts mit einem im Wesentlichen einheitlichen Vereinzelungsabstand zwischen einzelnen Saatkörnern des Saatguts ausgebildet. Die Saatkörner können dann als gleichmäßiger Saatgutstrom in einen Ablagebereich unmittelbar vor der Fangrolle geleitet und dort von dieser mit entsprechend einheitlichen Ablageabständen am Furchengrund angedrückt werden.

Vorzugsweise ist der Endabschnitt des Saatgutkanals im Arbeitsbetrieb starr bezüglich der Fangrolle befestigt. Somit ändert sich die räumliche Anordnung der Fangrolle und des unteren Endabschnitts des Saatgutkanals auch bei vertikalen Ausweichbewegungen der Schar nicht. Dies ermöglicht eine jederzeit reproduzierbare Übergabe der Saatkörner vom Saatgutkanal in den Ablagebereich unmittelbar vor der Fangrolle.

Vorzugsweise sind die Fangrolle und der Endabschnitt des Saatgutkanals derart angeordnet, dass ein Anschlusswinkel des Endabschnitts an eine Umfangstangente der Fangrolle 5° bis 15° beträgt. Dies ermöglicht ein zuverlässiges Ablegen der Saatkörner in einem Ablagebereich unmittelbar vor bzw. unterhalb der Lauffläche der Fangrolle. Dies begünstigt ein Andrücken der Saatkörner am Furchengrund unter gleichmäßigen Ablageabständen in Fahrtrichtung.

Vorzugsweise ist der Anschlusswinkel dabei fest vorgegeben oder einstellbar. Dadurch lassen sich reproduzierbare und/oder an das jeweilige Saatgut angepasste Ablagebedingungen für die Saatkörner zwischen Fangrolle und Furchengrund herstellen.

Vorzugsweise weißt die Fangrolle eine im Arbeitsbetrieb unnachgiebig abrollende Lauffläche auf, beispielsweise aus einem im Wesentlichen starren Material. Darunter ist zu verstehen, dass sich die Fangrolle beim Abrollen auf dem Ackerboden, insbesondere an Bodenunebenheiten, nicht nennenswert radial verformt. Derartige Fangrollen laufen besonders stabil und ermöglichen eine besonders zuverlässige und reproduzierbare Ablage der Saatkörner auf dem Furchengrund. Prinzipiell wären aber auch nachgiebig abrollende Fangrollen denkbar, beispielsweise solche mit Niederdruckreifen.

Vorzugsweise ist die Schar als Einzelscheibe, Doppelscheibe oder Schleppschar ausgebildet. Damit lassen sich für das jeweilige Saatgut geeignete Furchenquerschnitte in den zu jeweils bearbeitenden Ackerböden herstellen.

Die gestellte Aufgabe wird auch mit einer Einzelkornsämaschine gelöst, die wenigstens sechs im Arbeitsbetrieb in Querreihe angeordnete Einzelkornsäeinheiten gemäß einer der vorigen Ausführungsformen umfasst. Die Einzelkornsäeinheiten sind beispielsweise an einem gemeinsamen Rahmen angeordnet, beispielsweise an einem oder mehreren Querbalken, wobei sich äußere Querbalken dann vor/nach dem Arbeitsbetrieb auf bekannte Weise nach oben klappen lassen. Besonders vorteilhaft zur wirtschaftlichen Anpassung der Arbeitsbreite sind Rahmen zum Tragen von wenigstens 8 bis 20 in Querreihen angeordneten Einzelkornsäeinheiten.

Eine bevorzugte Ausführungsform der Erfindung ist in den Zeichnungen dargestellt. Es zeigen:
- Figur 1: eine Schrägansicht einer Einzelkornsäeinheit;
- Figuren 2A bis 2C: eine seitliche Ansicht und Teilansichten der Einzelkornsäeinheit beim Befahren eines ebenen Ackerbodens; und
- Figuren 3A bis 3C: eine seitliche Ansicht und Teilansichten der Einzelkornsäeinheit beim Befahren einer Unebenheit mit der Schar.

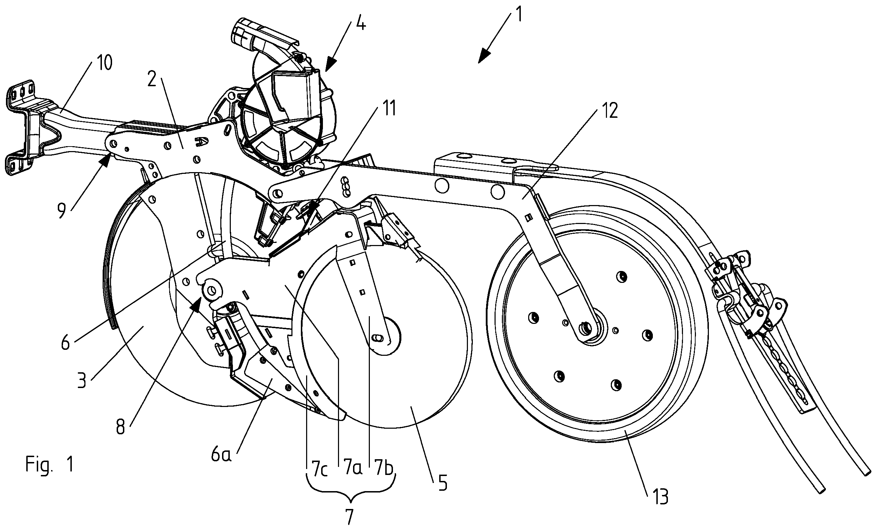

Wie die Figur 1 erkennen lässt, umfasst die Einzelkornsäeinheit 1 in einer bevorzugten Ausführungsform einen Scharträger 2 mit einer daran befestigten Schar 3, eine Vereinzelungsvorrichtung 4 für Saatgut, eine Fangrolle 5 und einen von der Vereinzelungsvorrichtung 4 zur Fangrolle 5 führenden Saatgutkanal 6. Der Saatgutkanal 6 umfasst einen unteren Endabschnitt 6a, der mit der Fangrolle 5 gemeinsam an einem Fangrollenträger 7 befestigt ist. Der untere Endabschnitt 6a arbeitet beispielsweise als Ablagerutsche für das vereinzelt ankommende Saatgut.

Der Fangrollenträger 7 umfasst vorzugsweise eine um eine horizontale Achse 8 kippbare Schwinge 7a, eine daran befestigte Gabel 7b zu Lagerung der Fangrolle 5 und ein vorderes Schutzblech 7c für die Fangrolle 5. Die Schwinge 7a ist an dem Scharträger 2 gelagert. Somit ist die Fangrolle 5 bezüglich des Scharträgers 2 und/oder der Schar 3 vertikal beweglich.

Der Scharträger 2 ist um eine horizontale Achse 9 vertikal schwenkbar an einem vorderen Verbindungsträger 10 gelagert. Der Verbindungsträger 10 dient der Befestigung der Einzelkornsäeinheit 1 an einem (nicht dargestellten) Rahmen einer Einzelkornsämaschine. Die Anordnung mehrerer Einzelkornsäeinheiten 1 in Querreihe an einer Einzelkornsämaschine ist an sich bekannt und daher an dieser Stelle nicht weiter erläutert.

Der Fangrollenträger 7 ist beispielsweise mit Hilfe wenigstens eines Federelements 11 nach unten hin federnd vorgespannt, um die Fangrolle 5 zum Herstellen eines ständigen Bodenkontakts im Arbeitsbetrieb nach unten zu drücken.

Der Vollständigkeit halber dargestellt ist ferner ein mit dem Scharträger 2 vertikal beweglich verbundener Andruckrollenträger 12 für eine an sich bekannte Andruckrolle 13. Das Federelement 11 wirkt beispielsweise zwischen dem Fangrollenträger 7 und dem Scharträger 2 und/oder zwischen dem Fangrollenträger 7 und dem Andruckrollenträger 12.

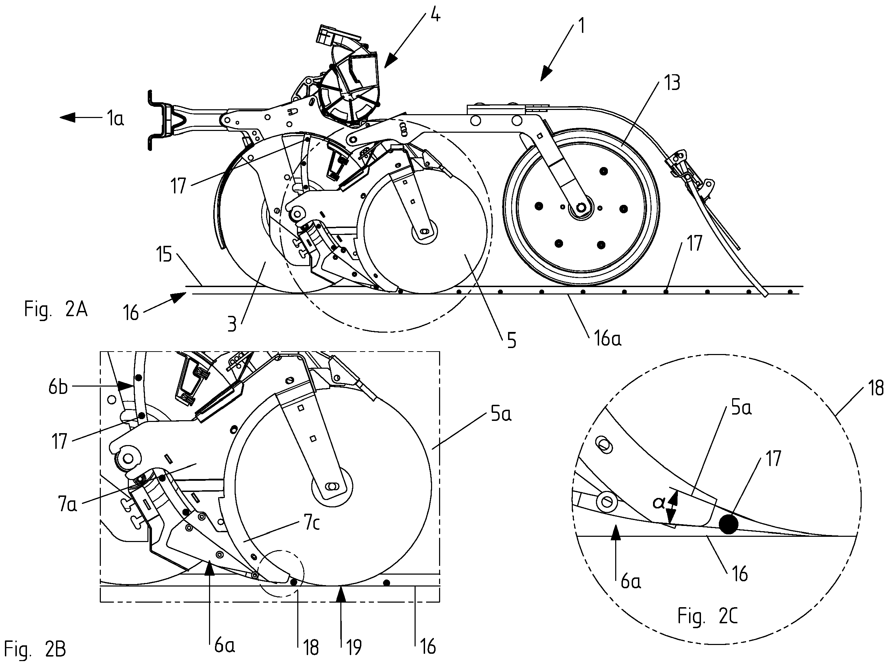

Die Figur 2A zeigt das Befahren eines ebenen Ackerbodens 15 in Fahrtrichtung 1a, in dem die Schar 3 eine Furche 16 mit einem Furchengrund 16a herstellt. Dahinter rollt die Fangrolle 5 ständig auf dem ebenen Furchengrund 16a ab. Die Andruckrolle 13 ist in der Figur 2A in einer Position auf dem Ackerboden 15 oberhalb der Furche 16 dargestellt.

Die Figur 2B verdeutlicht in einem Ausschnitt der Figur 2A, dass die Vereinzelungsvorrichtung 4 vereinzeltes Saatgut in Form von Saatkörnern 17 durch den Saatgutkanal 6 bläst bis in einen Ablagebereich 18 unmittelbar vor dem Kontaktbereich 19 der Fangrolle 5 mit dem Furchengrund 16a.

Der Saatgutkanal 6 umfasst oberhalb des starren unteren Endabschnitts 6a wenigstens einen biegsamen und/oder teleskopartigen (nicht gezeigt) oberen Abschnitt 6b.

Der untere Endabschnitt 6a des Saatgutkanals 6 ist beispielsweise an der Schwinge 7a und/oder an dem Schutzblech 7c starr mit dem Fangrollenträger 7 verbunden. Der beispielsweise schaufelförmige untere Endabschnitt 6a des Saatgutkanals 6 bildet mit einer Umfangstangente 5a der Fangrolle 5 vorzugsweise einen Anschlusswinkel α von 5° bis 15° aus, siehe die Figur 2C.

Dies ermöglicht eine zielgerichtete Ablage der Saatkörner 17 im Ablagebereich 18, so dass die Saatkörner 17 zuverlässig von der Lauffläche 5b Fangrolle 5 gegen den Furchengrund 16a gedrückt werden. Lage und Ausrichtung des unteren Endabschnitts 6a, insbesondere der Anschlusswinkel a, lassen sich vorzugsweise fest vorgeben und/oder einstellen.

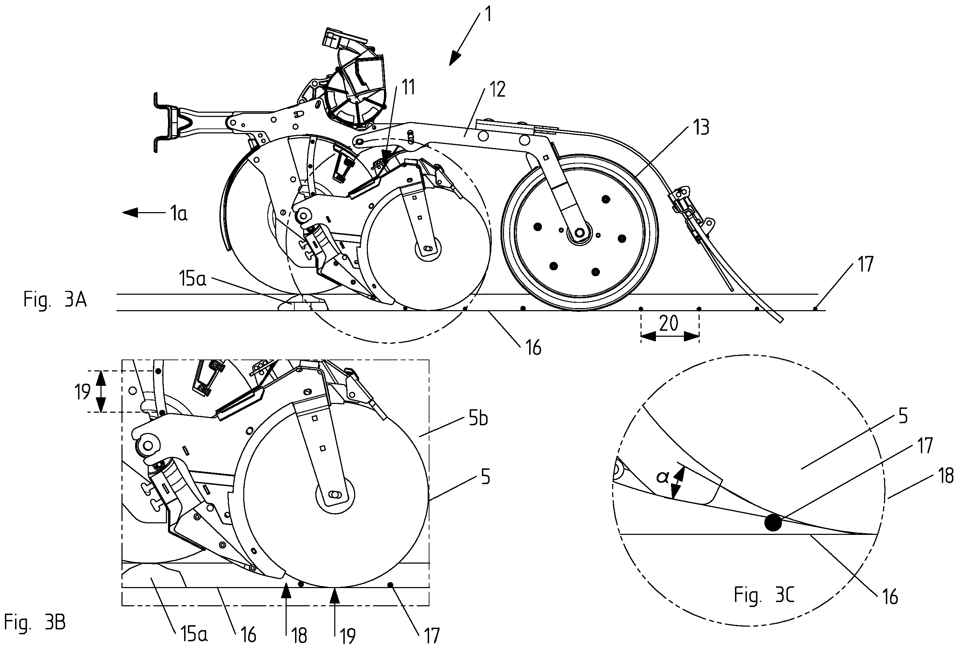

Wie die Figur 3A verdeutlicht, behält die Fangrolle 5 auch beim Befahren einer Unebenheit 15a im Ackerboden 15, die insbesondere eine Erhebung wie beispielsweise ein großer Stein ist, einen abrollenden Kontakt mit dem Furchengrund 16a bei. Dies wird durch die vertikale Beweglichkeit der Fangrolle 5 am Fangrollenträger 7 bezüglich des Scharträgers 2 und/oder der Schar 3 ermöglicht.

Ferner wird der Fangrollenträger 7 mit Hilfe des Federelements 11 bezüglich des Scharträgers 2 nach unten gegen den Furchengrund 16a gedrückt. In der Figur 3A läuft auch die Andruckrolle 13 beispielhaft auf dem Furchengrund 16a. Zudem ist auch der Andruckrollenträger 12 vertikal schwenkbar am Scharträger 2 befestigt. Dies soll verdeutlichen, dass ein ständiger Bodenkontakt der Fangrolle 5 auch bei unterschiedlichen vertikalen Positionen der Schar 3, der Fangrolle 5 und der Andruckrolle 13 zueinander gegeben ist.

In jedem Fall werden die in einem vorgegebenen Vereinzelungsabstand 19 (Figur 3B) zueinander durch den Saatgutkanal 6 geleiteten Saatkörner 17 mit einem gleichmäßigen Ablageabstand 20 (Figur 3A) auf dem Furchengrund 16 abgelegt und dort angedrückt.

Dies wird insbesondere dadurch ermöglicht, dass die Fangrolle 5 auch beim Befahren von Unebenheiten 15a mit der Schar 3 den abrollenden Kontakt zum Furchengrund 16a nicht verliert und somit eine kontinuierliche Abrollbewegung entsprechend der Arbeitsgeschwindigkeit der Einzelkornsäeinheit 1 beziehungsweise der zugehörigen Einzelkornsämaschine einhält.

Wie der Ausschnitt des Ablagebereichs 18 in der Figur 3C verdeutlicht, wird der Anschlusswinkel α auch beim Überfahren von Unebenheiten 15a mit der Schar 3 beibehalten. Somit bleibt die grundlegende Anordnung des unteren Endabschnitts 6a des Saatgutkanals 6 und der Fangrolle 5 zueinander im Ablagebereich 18 auch bei unregelmäßiger Bodenbeschaffenheit erhalten. Entsprechend kann ein vorgegebener Ablageabstand 20 in Fahrtrichtung 1a der Einzelkornsäeinheit 1 zuverlässig eingehalten werden. Dies ermöglicht zudem eine Maximierung der Arbeitsgeschwindigkeit bei gleichbleibend einheitlichem Ablageabstand 20.

Die Vereinzelungsvorrichtung 4 sorgt für einen im Wesentlichen konstanten Vereinzelungsabstand 19. Zu diesem Zweck werden zugehörige Vereinzelungsscheiben und Maschinenparameter an die zu vereinzelnden Saatkörner auf geeignete und prinzipiell bekannte Weise angepasst. Die durchgehend auf dem Furchengrund 16a abrollende Fangrolle 5 nimmt alle Saatkörner 17 auf gleiche Weise an ihrer Lauffläche 5b mit und bewirkt so schließlich einen einheitlichen Ablageabstand 20 der Saatkörner 17 entlang der Furche 16.

Die Anordnung der Vereinzelungsvorrichtung 4 auf dem Scharträger 2, insbesondere in Nähe der Schwenkachse 9, ermöglicht eine vergleichsweise erschütterungsarme und vibrationsarme Arbeitsweise der Vereinzelungsvorrichtung 4 und damit eine zuverlässige und präzise Vereinzelung unterschiedlicher Saatgüter mit einheitlichem Vereinzelungsabstand 19.

Als Saatgüter kommen beispielsweise Maiskörner, Sonnenblumenkerne, Rapskerne, Getreidekörner oder dergleichen in Frage.

Anstelle der in den Figuren gezeigten Schwinge 7a könnte der Fangrollenträger 7 ein Parallelogramm-Gestänge (nicht dargestellt) umfassen, an dem die Fangrolle 5 und der untere Endabschnitt 6a des Saatgutkanals 6 ohne zusätzliche Kippbewegung vertikal bezüglich des Scharträgers 2 bzw. der Schar 3 bewegt werden könnten.

Bei einer Einzelkornsämaschine mit mehreren Einzelkornsäeinheiten 1 ist jeweils jeder Schar 3 eine separate Vereinzelungsvorrichtung 4 und eine Fangrolle 5 mit einem Saatgutkanal 6 zugeordnet. Für mehrere Einzelkornsäeinheiten 1 gemeinsam ist vorzugsweise ein (nicht dargestellter) Saatgutbehälter vorhanden, aus dem die einzelnen Vereinzelungsvorrichtungen 4 mit Saatgut versorgt werden.

Die Einzelkornsäeinheiten 1 könnten je nach Arbeitsbreite der Einzelkornsämaschine an ihren äußeren Enden auf vertikal schwenkbaren Rahmen montiert sein, die vor/nach dem Arbeitsbetrieb der Einzelkornsämaschine 1 auf bekannte Weise nach oben geklappt werden.

## Patentansprüche

1. Einzelkornsäeinheit (1) für eine Einzelkornsämaschine, umfassend: einen Scharträger (2) mit einer daran befestigten Schar (3); eine am Scharträger (2) befestigte Vereinzelungsvorrichtung (4); eine Fangrolle (5); und einen von der Vereinzelungsvorrichtung (4) zur Fangrolle (5) führenden Saatgutkanal (6), wobei die Fangrolle (5) und ein unterer Endabschnitt (6a) des Saatgutkanals (6) an einem bezüglich des Scharträgers (2) beweglichen Fangrollenträger (7) befestigt sind, **dadurch gekennzeichnet, dass** der Saatgutkanal (6) zwischen der Vereinzelungsvorrichtung (4) und dem unteren Endabschnitt (6a) wenigstens einen biegsamen Schlauch umfasst oder der Saatgutkanal (6) wenigstens einen teleskopartigen Abschnitt zwischen der Vereinzelungsvorrichtung (4) und dem unteren Endabschnitt (6a) umfasst.

2. Einzelkornsäeinheit nach Anspruch 1, wobei der Fangrollenträger (7) eine Schwinge (7a) oder ein Parallelogramm-Gestänge mit vertikaler Beweglichkeit der Fangrolle (5) und des unteren Endabschnitts (6a) des Saatgutkanals (6) umfasst.

3. Einzelkornsäeinheit nach einem der vorigen Ansprüche, wobei der Fangrollenträger (7) nach unten hin federnd vorgespannt ist, insbesondere gegenüber dem Scharträger (2), um die Fangrolle (5) in eine von der Schar (3) gebildete Furche (16) zu drücken.

4. Einzelkornsäeinheit nach wenigstens einem der vorigen Ansprüche, wobei die Vereinzelungsvorrichtung (4) zur Vereinzelung des Saatguts mit einem einheitlichen Vereinzelungsabstand (19) zwischen Saatkörnern (17) des Saatguts ausgebildet ist.

5. Einzelkornsäeinheit nach wenigstens einem der vorigen Ansprüche, wobei der Endabschnitt (6a) des Saatgutkanals (6) im Arbeitsbetrieb der Einzelkornsäeinheit (1) starr bezüglich der Fangrolle (5) befestigt ist.

6. Einzelkornsäeinheit nach wenigstens einem der vorigen Ansprüche, wobei die Fangrolle (5) und der Endabschnitt (6a) des Saatgutkanals (6) derart angeordnet sind, dass ein Anschlusswinkel (a) des Endabschnitts (6a) an eine Umfangstangente (5a) der Fangrolle (5) 5° bis 15° beträgt.

7. Einzelkornsäeinheit nach Anspruch 6, wobei der Anschlusswinkel (a) fest vorgegeben oder einstellbar ist.

8. Einzelkornsäeinheit nach wenigstens einem der vorigen Ansprüche, wobei die Fangrolle (5) eine unnachgiebig abrollende Lauffläche (5b) aufweist.

9. Einzelkornsäeinheit nach wenigstens einem der vorigen Ansprüche, wobei die Schar (3) als Einzelscheibe, Doppelscheibe oder Schleppschar ausgebildet ist.

10. Einzelkornsämaschine mit wenigstens sechs im Arbeitsbetrieb in Querreihe angeordneten Einzelkornsäeinheiten (1) nach wenigstens einem der vorigen Ansprüche.

## Claims

1. Single seed sowing unit (1) for a single seed drill, comprising a coulter carrier (2) with a coulter (3) fixed thereto; a separating device (4) fixed to the coulter carrier (2); a catching roller (5); and a seed channel (6) leading from the separating device (4) to the catching roller (5), the catching roller (5) and a lower end section (6a) of the seed channel (6) being fixed to a catching roller carrier (7) that can be moved relative to the coulter carrier (2), **characterized in that** the seed channel (6) between the separating device (4) and the lower end section (6a) comprises at least one flexible hose, or the seed channel (6) comprises at least one telescopic section between the separating device (4) and the lower end section (6a).

2. Single seed sowing unit according to Claim 1, wherein the catching roller carrier (7) comprises a rocker (7a) or a parallelogram linkage with vertical mobility of the catching roller (5) and the lower end section (6a) of the seed channel (6) .

3. Single seed sowing unit according to one of the preceding claims, wherein the catching roller carrier (7) is spring-preloaded downwards, in particular relative to the coulter carrier (2), in order to force the catching roller (5) into a furrow (16) formed by the coulter (3).

4. Single seed sowing unit according to at least one of the preceding claims, wherein the separating device (4) for separating the seed is formed with a uniform separating distance (19) between seed grains (17) of the seed.

5. Single seed sowing unit according to at least one of the preceding claims, wherein the end section (6a) of the seed channel (6) is fixed rigidly with respect to the catching roller (5) in working operation of the single seed sowing unit (1).

6. Single seed sowing unit according to at least one of the preceding claims, wherein the catching roller (5) and the end section (6a) of the seed channel (6) are arranged in such a way that a connecting angle (α) of the end section (6a) to a circumferential tangent (5a) to the catching roller (5) is 5° to 15°.

7. Single seed sowing unit according to Claim 6, wherein the connecting angle (α) is fixedly predefined or adjustable.

8. Single seed sowing unit according to at least one of the preceding claims, wherein the catching roller (5) has an inflexibly rolling running surface (5b).

9. Single seed sowing unit according to at least one of the preceding claims, wherein the coulter (3) is formed as a single coulter, double coulter or drag coulter.

10. Single seed drill having at least six single seed sowing units (1) according to at least one of the preceding claims arranged in a transverse row in working operation.

## Revendications

1. Unité de semoir monograine (1) pour un semoir monograine, comprenant: un porte-soc (2) avec un soc (3) fixé à celui-ci; un dispositif de séparation (4) fixé au porte-soc (2); un rouleau de réception (5); et un canal à semences (6) conduisant du dispositif de séparation (4) au rouleau de réception (5), dans laquelle le rouleau de réception (5) et une partie d'extrémité inférieure (6a) du canal à semences (6) sont fixés à un support de rouleau de réception (7) mobile par rapport au porte-soc (2), **caractérisée en ce que** le canal à semences (6) comprend au moins un tuyau souple flexible entre le dispositif de séparation (4) et la partie d'extrémité inférieure (6a) ou le canal à semences (6) comprend au moins une partie télescopique entre le dispositif de séparation (4) et la partie d'extrémité inférieure (6a).

2. Unité de semoir monograine selon la revendication 1, dans laquelle le support de rouleau de réception (7) comprend une bascule (7a) ou un parallélogramme articulé avec une mobilité verticale du rouleau de réception (5) et de la partie d'extrémité inférieure (6a) du canal à semences (6).

3. Unité de semoir monograine selon au moins une des revendications précédentes, dans laquelle le support de rouleau de réception (7) est précontraint de façon élastique vers le bas, en particulier par rapport au porte-soc (2), afin de presser le rouleau de réception (5) dans un sillon (16) formé par le soc (3).

4. Unité de semoir monograine selon au moins une des revendications précédentes, dans laquelle le dispositif de séparation (4) est configuré pour la séparation des semences avec une distance de séparation unitaire (19) entre des graines (17) des semences.

5. Unité de semoir monograine selon au moins une des revendications précédentes, dans laquelle la partie d'extrémité (6a) du canal à semences (6) est fixée en fonctionnement de travail de l'unité de semoir monograine (1) de façon rigide par rapport au rouleau de réception (5).

6. Unité de semoir monograine selon au moins une des revendications précédentes, dans laquelle le rouleau de réception (5) et la partie d'extrémité (6a) du canal à semences (6) sont disposés de telle manière qu'un angle de raccordement (a) de la partie d'extrémité (6a) à une tangente périphérique (5a) du rouleau de réception (5) vaille 5° à 15°.

7. Unité de semoir monograine selon la revendication 6, dans laquelle l'angle de raccordement (a) est prévu fixe ou est réglable.

8. Unité de semoir monograine selon au moins une des revendications précédentes, dans laquelle le rouleau de réception (5) présente une face de roulement (5b) roulant sans fléchissement.

9. Unité de semoir monograine selon au moins une des revendications précédentes, dans laquelle le soc (3) est formé par un disque simple, un disque double ou un soc traînant.

10. Semoir monograine avec au moins six unités de semoir monograine (1) selon au moins une des revendications précédentes, disposées en rangée transversale en fonctionnement de travail.
